# FASCICULE DE BREVET EUROPEEN

(11) **EP 2 898 478 B1**
(45) Date de publication et mention de la délivrance du brevet: **04.07.2018**
(21) Numéro de dépôt: 13803204.0
(22) Date de dépôt: 12.09.2013
(51) Int. Cl.: G06T 11/00, G06T 1/20

(54) **MOTEUR HYBRIDE POUR PROCESSEUR CENTRAL ET PROCESSEUR GRAPHIQUE**
HYBRIDMOTOR FÜR EINE ZENTRALPROZESSOREINHEIT UND EINE GRAFIKVERARBEITUNGSEINHEIT
HYBRID ENGINE FOR CENTRAL PROCESSING UNIT AND GRAPHICS PROCESSING UNIT

(30) Priorité: 24.09.2012 FR 1202528
(43) Date de publication de la demande: 29.07.2015
(73) Titulaire: Allegorithmic, 63000 Clermont-Ferrand (FR)
(72) Inventeur: SOUM, Christophe, 63100 Clermont-Ferrand (FR); BATUT, Eric, 63100 Clermont-Ferrand (FR)
(74) Mandataire: Gabriel, Franck
(86) Numéro de dépôt international: PCT/IB2013/002005
(87) Numéro de publication internationale: WO 2014/045094

(56) Documents cités:
- US-A1- 2005 231 502
- Allegorithmic: "Allegorithmic Substance, Threaded Middleware", , 31 mars 2009 (2009-03-31), pages 1-38, XP055058315, Extrait de l'Internet: URL:http://de.slideshare.net/guest40fc7cd/ threading-successes-06-allegorithmic [extrait le 2013-04-03] cité dans la demande
- ALLEGORITHMIC: "Substance: Unleashing online gaming with descriptive textures", INTERNET CITATION, mars 2009 (2009-03), pages 1-10, XP002662009, Extrait de l'Internet: URL:http://download.allegorithmic.com/docu ments/brochures/substance_air_white_paper_ march09.pdf [extrait le 2013-04-03] cité dans la demande

## Description

### Domaine technique de l'invention

La présente invention concerne un procédé de génération de textures procédurales pour calculateur avec architecture à mémoire CPU/GPU unifiée, permettant de générer à partir de données numériques et d'opérateurs d'une pluralité de filtres procéduraux interprétées par un moteur de rendu, des textures pour contenus gérés par une carte graphique (GPU). Elle concerne également le dispositif correspondant.

Le dispositif et procédé décrits dans ce document sont avantageusement prévus pour une utilisation avec un moteur de génération de textures procédurales tel que par exemple le moteur développé par la déposante et désigné par l'appellation *substance.* Un tel moteur permet de générer dans différentes résolutions une variété de textures dynamiques et paramétrables, en partant d'un fichier de description stockant :
- les éléments de base (bruits, motifs, images préexistantes) ;
- les paramètres servant à générer ces éléments de base, le cas échéant ;
- les diverses étapes de filtrage appliquées à ces éléments de base ou aux images générées par des filtrages précédents ;
- les paramètres modifiant le mode d'opération de ces filtres ;
- les dépendances de chaque filtre (liste des entrées utilisées par chaque opération) ;
- la liste des textures à générer en sortie, leur format, ainsi que leur usage présumé.

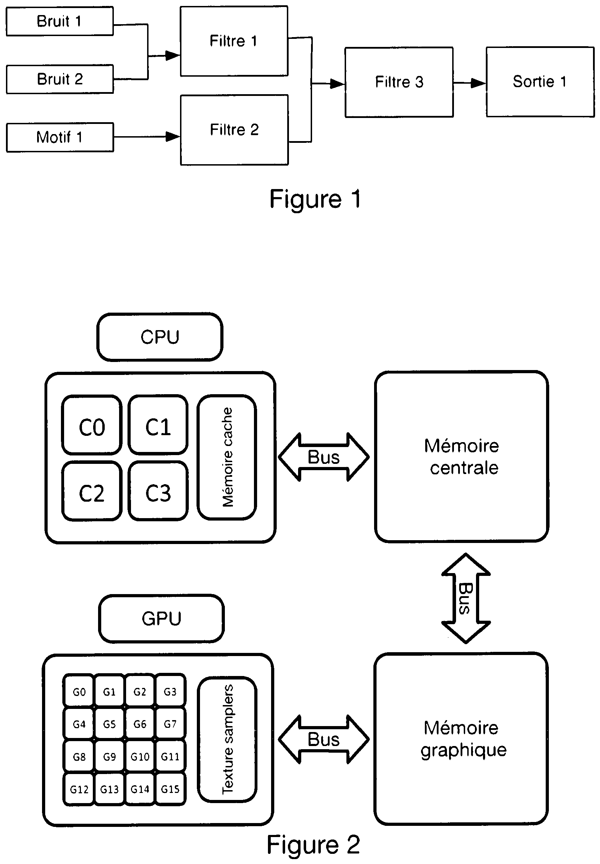

A l'exécution, ce fichier de description est interprété par le moteur de rendu et un graphe de calcul est construit à partir des informations extraites du fichier de description. Un exemple de graphe de calcul est donné à la figure 1.

Le graphe ainsi construit respecte par construction les dépendances entre les filtres et contient donc l'information de l'ordre dans lequel doivent être activés les différents filtres afin de générer les sorties souhaitées.

### Etat de la technique

Un tel moteur peut être utilisé sur une variété de plateformes : ordinateurs de bureau (PC, Mac), consoles de jeu, terminaux mobiles. Il existe aujourd'hui sur ces plateformes deux organes de calcul pouvant être utilisés lors du rendu d'une texture procédurale : le CPU (« Central Processing Unit », ou en français « unité centrale » ou « processeur central ») et le GPU (Graphical Processing Unit, ou en français « processeur graphique » ou « carte graphique »).

Le CPU est le processeur central d'un ordinateur, celui qui est responsable de l'exécution du système d'exploitation ainsi que de faire tourner les applications utilisées. Les CPUs actuels comportent un petit nombre de coeurs capables d'effectuer des tâches en parallèle, typiquement 4 ou 6. Ces coeurs de processeur sont très sophistiqués et peuvent accomplir des opérations complexes. De plus, ces coeurs de processeur accèdent à la mémoire centrale par l'intermédiaire d'un système de mémoires caches, destiné à réduire le temps d'accès à des données utilisées récemment.

Le GPU est un processeur supplémentaire dédié aux opérations graphiques (composition de textures, opérations de géométrie en 3D, calculs d'éclairages, post-traitements d'images, etc). Le GPU est responsable du calcul de l'image finale affichée sur l'écran à partir des informations fournies par le CPU. Les GPUs actuels comportent un très grand nombre d'unités de calcul, typiquement plusieurs centaines. Ces unités de calcul sont avant tout dédiées à un certain type d'opérations et beaucoup moins sophistiquées que les coeurs de CPU. D'autre part, ces unités de calcul manipulant principalement des images, elles accèdent à leur mémoire de travail par l'intermédiaire de blocs chargés de l'échantillonnage des textures utilisées. Ces blocs appelés *texture samplers* réalisent un certain nombre d'opérations de manière câblée : interpolation, filtrage bi- ou tri-linéaire, gestion du niveau de détail pour les textures disponibles en versions de près / de moyennement près / de loin, décompression de textures compressées, etc. De plus, de part le nombre de coeurs intégrés et la surface de silicium résultante, les GPUs sont cadencés à des fréquences inférieures à celles des CPUs. Lors du rendu d'une texture par un moteur de rendu tel que « Substance », le séquenceur doit parcourir le graphe et exécuter chaque filtre dans un ordre garantissant la disponibilité d'entrées valides pour chaque filtre. Les versions classiques des moteurs de rendu tel que celui de la déposante exécutent l'intégralité des filtres disponibles sur un seul organe de calcul.

Le document XP055058315 intitulé *« Procedural Textures on multi-core »* est une présentation technico-commerciale d'un procédé de génération de textures procédurales pour processeur à architecture multi-coeurs (*« multi-core »*). Le *« threading »* évoqué dans ce document (en particulier le passage de la page 15 relatif aux « *threading stratégies* ») concerne le mode de répartition des tâches ou fils (« *threads* ») dans un processeur multi-coeurs en fonction des coeurs disponibles. Ce document ne décrit pas un procédé permettant de générer des textures procédurales soit à partir du CPU ou du GPU. Par ailleurs, bien que deux versions de produit soient présentées, à savoir une pour CPU et une pour GPU, ces deux versions sont totalement indépendantes.

Le document XP002662009 intitulé *« Substance : Unleashing online gaming with descriptive textures »* décrit un outil d'édition de textures procédurales et un moteur de rendu de telles textures utilisant des filtres de génération et de transformation.

On constate que ces approches sont très récentes et génèrent un important besoin d'optimisation afin de parvenir à des niveaux de performance satisfaisants pour les applications actuelles dont les contenus graphiques et virtuels sont très riches.

Tout d'abord, un premier objet de l'invention consiste à prévoir un procédé de génération de textures procédurales plus efficace et plus rapide que les processus traditionnels.

Un autre objet de l'invention consiste à prévoir un procédé de génération de texture procédurale susceptible de pouvoir fonctionner en temps sensiblement réel.

Encore un autre objet de l'invention consiste à prévoir un dispositif de génération de textures procédurales adapté pour produire des performances de vitesses de rendu sensiblement améliorées, sans perte de qualité des images produites.

### Exposé de l'invention

Sur des ordinateurs de bureau, le CPU et le GPU n'ont pas accès à la même mémoire. Avant tout calcul graphique, le CPU doit récupérer les données en mémoire centrale, et les transférer au GPU qui va les stocker dans une mémoire dédiée. Ce transfert est géré par le logiciel pilote du GPU, et est la plupart du temps asymétrique : transférer des données vers le GPU va beaucoup plus vite que les transférer depuis le GPU. Un exemple d'une telle architecture est donné à la figure 2. Sur des machines à mémoires séparées, les performances prohibitives des transferts depuis la mémoire dédiée au GPU vers la mémoire centrale rendent irréaliste une implémentation d'un moteur de rendu qui utiliserait les deux organes de calcul pour l'exécution du graphe. En effet, le transfert des données en sortie d'un filtre exécuté sur le GPU afin de les mettre à disposition du CPU prendrait beaucoup trop de temps.

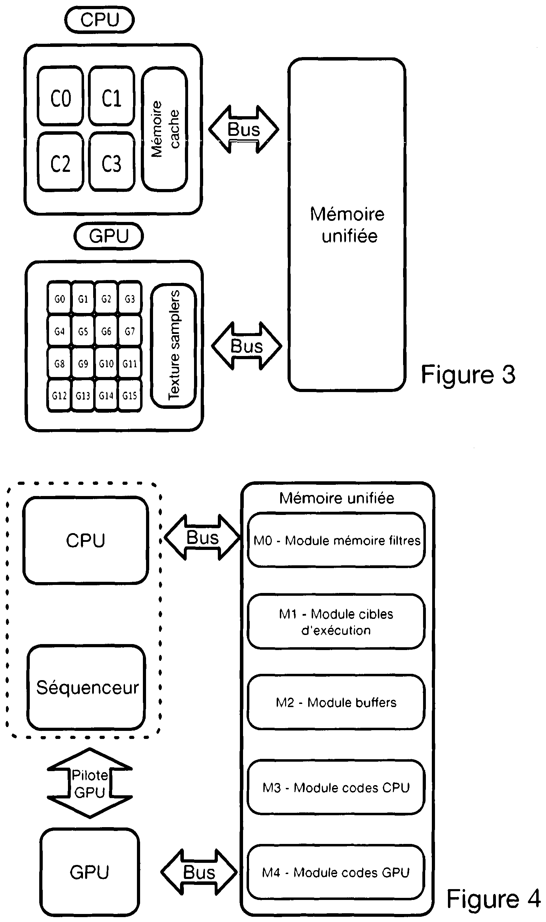

Les plateformes mobiles (« smartphones », tablettes, certaines consoles de jeu) sont architecturées différemment : afin de réduire les coûts, une seule mémoire est disponible. Cette mémoire est accessible aussi bien depuis le CPU et le GPU, et la charge que représente pour le CPU l'envoi de données au GPU est allégée de manière significative. Le logiciel pilote du GPU se contente de transférer l'emplacement des données en mémoire plutôt que les données elles-mêmes. Un exemple d'une telle architecture est donné à la figure 3. Une architecture à mémoire unifiée permet la mise au point d'un système qui vise à réduire le temps de calcul du graphe en exécutant chaque filtre sur sa cible de prédilection. Les échanges de données entre le CPU et le GPU se résumant à des échanges d'adresses mémoire, il n'y a plus d'inconvénient à utiliser en séquence des filtres tournant sur des organes de calcul différents.

L'invention prévoit un procédé de génération de textures procédurales pour calculateur avec architecture à mémoire CPU/GPU unifiée selon la revendication 1.

Le procédé et le dispositif selon l'invention sont basés sur le fait que, de part les calculs utilisés, il existe des filtres qui se prêtent mieux à une exécution sur CPU, et d'autres qui se prêtent mieux à une exécution sur GPU. La cible de prédilection de chaque filtre dépend des opérations effectuées, de la régularité ou non des accès mémoire effectués, ou encore de la nécessité de fabriquer des données indisponibles à partir des données existantes, comme le font par exemple les *texture samplers* des GPUs. Par exemple, un filtre reproduisant le mode de fonctionnement des *textures samplers* du GPU tourne de manière sous-optimale sur le CPU qui doit effectuer de manière programmée les opérations qui sont câblées sur le GPU. Cette préférence est fixe et ne dépend que des calculs effectués par ledit filtre. En particulier, elle ne dépend pas des paramètres qui modifient l'opération d'un filtre donné.

Selon un mode de réalisation avantageux, on indique pour chaque filtre, en plus d'une cible CPU ou GPU de prédilection, une éventuelle implémentation possible sur une autre cible si elle est disponible.

Selon un autre mode de réalisation avantageux, lorsque le séquenceur parcourt une branche du graphe, il tente de parcourir simultanément une seconde branche du graphe, en exécutant dans la mesure du possible les filtres de cette seconde branche sur l'organe de calcul CPU ou GPU qui n'est pas utilisé par le filtre en cours de la branche principale.

L'invention prévoit également un produit programme d'ordinateur selon la revendication 4.

### Brèves description des figures

Tous les détails de réalisation sont donnés dans la description qui suit, complétée par les figures 1 à 6, présentées uniquement à des fins d'exemples non limitatifs, et dans lesquelles:
- la figure 1 illustre un exemple de graphe de calcul de filtres ;
- la figure 2 présente un exemple d'architecture avec mémoires CPU/GPU séparées communément utilisée pour des ordinateurs de bureau;
- la figure 3 montre un exemple d'architecture avec une mémoire CPU/GPU unifiée communément utilisé pour des ordinateurs ou dispositifs mobiles tels que des « smartphones », des tablettes, consoles de jeu, etc, de type connu ;
- la figure 4 montre de façon schématique un exemple de mise en oeuvre d'un dispositif de génération de textures procédurales selon l'invention ;
- la figure 5 présente les différentes étapes du procédé selon l'invention avec le parcours du graphe permettant de générer les textures procédurales ;
- la figure 6 présente une variante du procédé selon l'invention avec parcours en parallèle d'une branche primaire et secondaire.

### Description détaillée de l'invention

Un exemple de dispositif sous-jacent à la présente invention est donné à la figure 4. Les différents éléments de ce dispositif sont :
- le CPU et le GPU déjà décrits plus haut ;
- la mémoire unifiée, elle-aussi déjà décrite plus haut, connectée à la fois au GPU et au CPU ;
- le séquenceur est un programme hébergé par le CPU dans les implémentations habituelles. Le séquenceur est chargé de parcourir la liste de filtres établie lors de la construction du graphe, de paramétrer chaque filtre avec les bonnes valeurs, et de l'activation de chaque filtre au moment nécessaire.
- le pilote GPU, ou *GPU driver*, est une couche logicielle hébergée par le CPU permettant de contrôler l'activité du GPU. C'est par l'intermédiaire du pilote GPU que le séquenceur peut déclencher tel ou tel filtre sur le GPU, ou encore indiquer au GPU les buffers à partir desquels celui-ci doit travailler.

La mémoire utilisée par le moteur de rendu peut être compartimentée en plusieurs zones de manière à stocker dans des zones contigües des informations similaires :
- une zone M0, initialisée lors de la construction du graphe, contenant la liste des filtres à activer, les valeurs des paramètres pour chaque filtre, ainsi que les dépendances entre les diverses étapes de filtrage. C'est le contenu de cette mémoire qui retranscrit la structure de graphe construite lors de la lecture du fichier de description.
- une zone M1, qui contient la cible de prédilection de chaque filtre. Cette mémoire peut être remplie dès l'initialisation du moteur, mais son contenu peut aussi varier en fonction de la plateforme sur laquelle le rendu est effectué.
- une zone M2, qui contient les buffers de travail du moteur de rendu. Ces buffers sont les zones de stockage temporaire des images intermédiaires calculées par les filtres. Dans l'exemple donné à la figure 1, la sortie du filtre 1 devant être utilisée par le filtre 3 serait stockée dans un buffer temporaire.
- des zones M3 et M4, qui contiennent les programmes associés aux filtres, dans leurs versions CPU et dans leurs versions GPU. Lors du parcours du graphe et de l'exécution des filtres par le séquenceur, le code à exécuter sur le CPU ou sur le GPU sera lu depuis ces mémoires. Il est possible de stocker dans ces mémoires uniquement le code des filtres pour lesquels l'implémentation sur la cible donnée est intéressante, de manière à ne pas surcharger l'empreinte mémoire avec des implémentations complètement inadaptées de certains filtres.

Un point phare de la solution présentée consiste à intégrer au séquenceur une mémoire contenant pour chaque filtre disponible sa cible de prédilection, et à modifier la boucle de parcours du graphe afin d'exploiter cette nouvelle information. Ainsi, chaque filtre est exécuté sur la cible qui garantit un temps de calcul minimal, optimisant de cette manière le temps de calcul global du graphe. Dans un premier temps, la préférence de chaque filtre est exprimée de manière binaire, de manière à indiquer :
- ce filtre doit tourner sur le CPU ;
- ce filtre doit tourner sur le GPU.

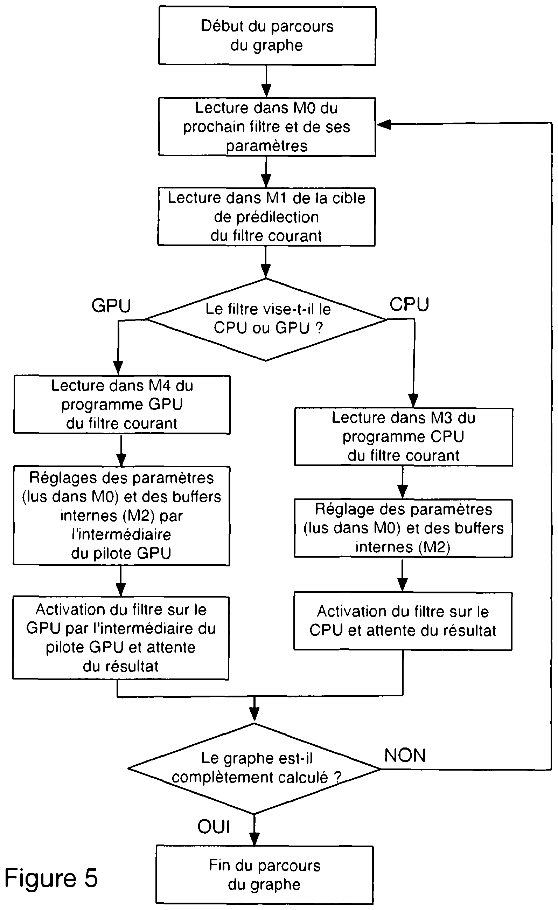

Dans son implémentation la plus simple, le procédé ne considère qu'une préférence binaire pour chaque filtre, qui indique sur quelle cible doit tourner le filtre en question. Le procédé associé de parcours du graphe est illustré à la figure 5 :
- lors du parcours du graphe (lecture séquentielle de la mémoire M0), identifier pour chaque filtre appelé sa cible de prédilection, stockée dans la mémoire M1 ;
- charger la version adaptée du filtre depuis la mémoire M3 ou M4, selon la cible identifiée à l'étape précédente ;
- régler les valeurs des paramètres utilisés (lus dans M0 lors de l'identification du filtre), ainsi que les adresses des buffers internes à utiliser (mémoire M2), soit directement avant l'appel du filtre dans le cas d'une exécution sur CPU, soit par appel(s) au pilote GPU dans le cas du GPU ;
- exécuter le code lu dans la mémoire M3 ou M4, soit directement dans le cadre d'une exécution sur CPU, soit par appel(s) au pilote GPU dans le cas du GPU.

Le procédé proposé permet de faire en sorte que chaque filtre soit exécuté sur la cible où son exécution est la plus avantageuse, le critère de rapidité d'exécution étant généralement utilisé. Cependant, cette approche n'exploite à un instant donné qu'un seul organe de calcul sur les deux présents. Pour optimiser d'avantage l'utilisation des processeurs, on augmente l'expressivité du contenu de la mémoire M1 de manière à exprimer une préférence plus souple. On peut ainsi envisager d'indiquer pour chaque filtre non seulement sa cible de prédilection mais aussi si une implémentation sur une autre cible si elle est disponible, de la manière suivante :
- ce filtre ne tourne que sur CPU ;
- ce filtre ne tourne que sur GPU ;
- ce filtre tourne de préférence sur le CPU mais une implémentation existe sur le GPU ;
- ce filtre tourne de préférence sur le GPU mais une implémentation existe sur le CPU.

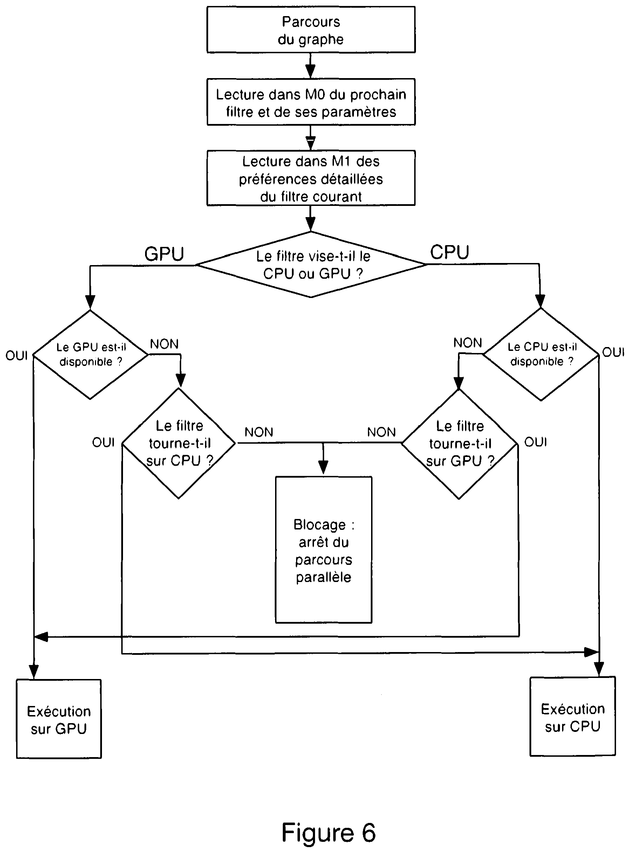

Lorsque le séquenceur parcourt une branche du graphe, il peut aussi tenter de parcourir simultanément une seconde branche du graphe, en exécutant dans la mesure du possible les filtres de cette seconde branche sur l'organe de calcul qui n'est pas utilisé par le filtre en cours de la branche « principale ». Ce parcours simultané de deux branches du graphe en parallèle s'arrête dès que le séquenceur arrive à un point où les filtres des branches primaire et secondaire doivent tourner sur le même organe de calcul. Dans ce cas là, la priorité est donnée à la branche primaire, et le parcours de la branche secondaire reprend dès que les deux filtres à exécuter peuvent l'être sur des cibles distinctes. Cette variante avantageuse du procédé d'aiguillage des filtres est illustrée à la figure 6.

### Autres variantes

La description de la présente solution s'appuie sur les deux organes de calcul disponibles aujourd'hui de façon courante que sont le CPU et le GPU. Si une autre sorte de processeur spécialisé est disponible sur une architecture donnée, il est alors possible d'étendre la présente solution à trois ou plus organes de calcul (CPU, GPU, xPU...). Il faut dans ce cas augmenter l'expressivité du contenu de la mémoire M1 de manière à pouvoir intégrer un troisième organe dans l'expression des préférences de chaque filtre, et ajouter une mémoire pour stocker la version xPU du code de chaque filtre, ou uniquement des filtres pour lesquels une implémentation sur xPU a un intérêt.

Il est aussi envisageable d'ordonner la préférence de chaque filtre en fonction des cibles (CPU > GPU > xPU par exemple). De cette manière, on peut parcourir plus de branches du graphe en parallèle, ou choisir de limiter le nombre de branches parcourues en parallèle et d'augmenter le nombre d'options disponibles pour faciliter le calcul de la branche secondaire, afin d'éviter la situation de blocage mentionnée précédemment.

Une autre variante de la présente solution consiste à utiliser des moyens logiciels ou matériels d'évaluation du niveau de charge courant des divers organes de calcul utilisés. Si de plus on dispose pour chaque filtre de sa performance quantifiée pour chaque cible capable de l'exécuter, alors on peut encore assouplir le processus d'aiguillage des filtres en évaluant une métrique composite calculée à partir de l'impact théorique de chaque filtre sur l'organe de calcul considéré, en tenant compte de la charge actuelle de celui-ci.

## Revendications

1. Procédé de génération de textures procédurales pour calculateur avec architecture à mémoire CPU/GPU unifiée dans lequel les échanges de données entre le CPU et le GPU consistent en des échanges d'adresses mémoire dans la mémoire unifiée pour CPU et GPU, ledit procédé permettant de générer à partir de données numériques et d'opérateurs d'une pluralité de filtres procéduraux interprétées par un moteur de rendu, des textures pour contenus gérés par une carte graphique (GPU), et comportant les étapes consistant à :
- recevoir les données d'un graphe constitué d'une pluralité de filtres et parcourir de façon séquentielle ledit graphe à l'aide d'un séquenceur intégrant une mémoire M1 qui contient la cible de prédilection CPU ou GPU de chaque filtre, de façon à permettre pour chaque filtre parcouru ;
- d'identifier, à partir de données d'identification de cible d'exécution des filtres, le processeur CPU ou GPU présélectionné pour l'exécution de ce filtre;
- de recevoir, à partir d'au moins un module d'instructions correspondant au type de processeur CPU ou GPU présélectionné, les instructions de la version CPU ou GPU présélectionnée du filtre prévues dans des zones M3 et M4 qui contiennent les programmes associés aux filtres dans leurs versions CPU et dans leurs versions GPU;
- de recevoir, à partir d'au moins un module de stockage de filtres, les paramètres du filtre en cours prévues dans une zone M0, initialisée lors de la construction du graphe et contenant la liste des filtres à activer et les valeurs des paramètres pour chaque filtre ainsi que les dépendances entre les diverses étapes de filtrage;
- de recevoir, à partir d'au moins un module de stockage de buffers, les adresses de buffers du filtre en cours prévues dans une zone M2, qui contient les buffers de travail du moteur de rendu ;
- d'appliquer les valeurs prévues pour les entrées de filtres à valeur numérique ;
- d'exécuter les instructions du filtre avec les paramètres réglés de façon à exécuter chaque filtre sur la cible de prédilection fournissant un temps de calcul global minimal ;
- de stocker les résultats intermédiaires obtenus ;
- lorsque tous les filtres du graphe sont exécutés, générer, à l'aide d'un moteur de rendu, au moins une texture d'affichage.

2. Procédé de génération de textures procédurales selon la revendication 1, dans lequel on indique, pour chaque filtre, en plus d'une cible CPU ou GPU de prédilection, une éventuelle implémentation possible sur une autre cible si elle est disponible.

3. Procédé de génération de textures procédurales selon l'une des revendications 1 ou 2, dans lequel lorsque le séquenceur parcourt une branche du graphe, il tente de parcourir simultanément une seconde branche du graphe, en exécutant dans la mesure du possible les filtres de cette seconde branche sur l'organe de calcul CPU ou GPU qui n'est pas utilisé par le filtre en cours de la branche principale.

4. Un produit programme d'ordinateur destiné à être chargé dans une mémoire associée à un processeur, le produit programme d'ordinateur comportant des portions de code de logiciel mettant en oeuvre le procédé selon l'une des revendications 1 à 3 lorsque le programme est exécuté par le processeur.

## Patentansprüche

1. Verfahren zum Erzeugen von Verfahrenstexturen für einen Rechner mit einer vereinheitlichten CPU / GPU-Speicherarchitektur, worin der Datenaustausch zwischen der CPU und der GPU aus dem Austauschen von Speicheradressen im einheitlichen Speicher für CPU und GPU besteht, wobei das besagte Verfahren es ermöglicht, aus digitalen Daten und Operatoren einer Vielzahl von prozeduralen Filtern, welche von einer Rendering-Engine interpretiert werden, Texturen für Inhalte zu generieren, die von einer Grafikkarte (GPU) verwaltet werden, und die folgenden Schritte umfasst:
- Empfangen der Daten von einem Graph, der aus einer Vielzahl von Filtern besteht, und sequentielles Durchsuchen des besagten Graphen mittels eines Sequenzers, welcher einen das CPU- oder GPU-Wahltarget von jedem Filter enthaltenden Speicher M1 integriert, um so für jedes durchlaufene Filter Folgendes zu ermöglichen;
- Identifizieren der CPU- oder GPU-Prozessoren, die für die Ausführung dieses Filters vorgewählt sind, aus Identifikationsdaten vom Filterausführungstarget;
- Empfangen der in Bereichen M3 und M4 vorgesehenen Anweisungen der vorgewählten CPU- oder GPU-Version des Filters aus mindestens einem dem Typ des vorgewählten CPU- oder GPU-Prozessors entsprechenden Anweisungsmodul, enthaltend die mit den Filtern in ihrer CPU- und GPU-Versionen verbundenen Programme;
- Empfangen der Parameter des aktuellen Filters aus mindestens einem Filterspeichermodul, vorgesehen in einem Bereich M0, welches während des Aufbaus eines Graphen initialisiert wird, und enthaltend die Liste der zu aktivierenden Filter und der Parameterwerte für jedes Filter sowie die Abhängigkeiten zwischen den verschiedenen Filterungsschritten;
- Empfangen der Pufferadressen des aktuellen Filters aus mindestens einem Pufferspeichermodul, welche in einem Bereich M2 vorgesehen sind, enthaltend die Arbeitspuffer der Rendering-Engine;
- Anwenden der vorhergesagten Werte für die Eingaben von Zahlenwertfiltern;
- Ausführen der Filteranweisungen mit den eingestellten Parametern; um jedes Filter auf dem Vorzugsziel auszuführen, was eine minimale Gesamtberechnungszeit liefert;
- Speichern der erhaltenen Zwischenergebnisse;
- wenn alle Filter des Graphen ausgeführt werden, Generieren mindestens einer Anzeigetextur mittels einer Rendering-Engine.

2. Verfahren zum Erzeugen von Verfahrenstexturen gemäss Anspruch 1, worin für jedes Filter zusätzlich zu einem das CPU- oder GPU-Wahltarget eine mögliche Implementierung auf einem anderen Target angezeigt wird, wenn dieses verfügbar ist.

3. Verfahren zum Erzeugen von Verfahrenstexturen gemäss einem der Ansprüche 1 oder 2, worin, wenn der Sequenzer einen Zweig des Graphen durchläuft, er versucht, gleichzeitig einen zweiten Zweig des Graphen durchzulaufen, wobei die Filter dieses zweiten Zweiges so weit wie möglich auf der CPU- oder GPU-Rechnereinrichtung ausgeführt werden, welche nicht vom aktuellen Filter des Hauptzweiges verwendet wird.

4. Computerprogrammprodukt, das zum Laden in einen einem Prozessor zugeordneten Speicher vorgesehen ist, wobei das Computerprogrammprodukt Teile von Softwarecode umfasst, die das Verfahren gemäss einem der Ansprüche 1 bis 3 implementieren, wenn das Programm durch den Prozessor ausgeführt wird.

## Claims

1. Method for generating procedural textures for a computer with a unified CPU/GPU memory architecture in which the data exchanges between the CPU and the GPU consist of exchanges of memory addresses in the unified memory for CPU and GPU, said method making it possible to generate, from digital data and operators of a plurality of procedural filters interpreted by a rendering engine, textures for contents managed by a graphics card (GPU), and comprising the steps consisting in:
- receiving the data of a graph consisting of a plurality of filters and sequentially browsing said graph by means of a sequencer integrating a M1 memory containing the preferred CPU or GPU target of each filter, so as to allow for each filter travelled:
- identifying, from filter execution target identification data, the CPU or GPU processor preselected for the execution of this filter;
- receiving, from at least one instruction module corresponding to the type of preselected CPU or GPU processor, the instructions of the preselected CPU or GPU version of the filter provided in the zones M3 and M4 that contain the programs associated to the filters in their CPU and GPU versions .;
- receiving, from at least one filter storage module, the parameters of the current filter provided in a zone M0, initialised during the construction of the graph and containing the list of the filters to activate and the parameter values for each filter as well as the dependencies between the various filtering steps;
- receiving, from at least one buffer storage module, the buffer addresses of the current filter provided in a zone M2 containing the working buffers of the rendering engine;
- applying the predicted values for the numerical value filter inputs;
- executing the filter instructions with the parameters set so as to execute each filter on the preferred target supplying a minimum global computing time;
- storing the intermediate results obtained;
- when all the filters of the graph are executed, generating by means of a rendering engine at least one display texture.

2. Method for generating procedural textures according to claim 1, wherein one indicates for each filter, in addition to a preferred CPU or GPU target, a possible implementation on another target if it is available.

3. Method for generating procedural textures according to one of claims 1 or 2, wherein when the sequencer traverses a branch of the graph, it attempts to traverse simultaneously a second branch of the graph, performing as far as possible the filters of this second branch on the CPU or GPU computing element that is not used by the current filter of the main branch.

4. Computer program product designed to be loaded into a memory associated with a processor, the computer program product comprising portions of software code implementing the method according to one of claims 1 to 3 when the program is executed by the processor.
